# EUROPEAN PATENT SPECIFICATION

(11) **EP 3 874 180 B1**
(45) Date of publication and mention of the grant of the patent: **02.07.2025**
(21) Application number: 19805865.3
(22) Date of filing: 28.10.2019
(51) Int. Cl.: F16H 57/023, F16H 57/03, F16H 57/08

(54) **ASSEMBLY METHOD FOR A PLANETARY GEAR SYSTEM**
MONTAGEVERFAHREN FÜR EIN PLANETENGETRIEBESYSTEM
PROCÉDÉ D'ASSEMBLAGE POUR UN SYSTÈME D'ENGRENAGE PLANÉTAIRE

(30) Priority: 30.10.2018 IT 201800009897
(43) Date of publication of application: 08.09.2021
(73) Proprietor: Base Studio Arge, Teknoloji ve Sanayi A.S., 41400 Gebze/Kocaeli (TR)
(72) Inventor: HACIYUNUS, Ahmet, Uskudar Istanbul (TR); PONTANARI, Marco, 38066 Riva Del Garda (Trento) (IT); EZER, Aydogan, Tuzla Istanbul (TR)
(74) Representative: Berkkam, Ayfer
(86) International application number: PCT/IB2019/059217
(87) International publication number: WO 2020/089767

(56) References cited:
- EP-A1- 2 940 347
- WO-A1-2007/048776
- CN-A- 108 679 216
- US-B2- 9 776 483

## Description

The present invention relates to an assembly method for assembling a planetary gear system.

Planetary gear system refers to a transmission system comprising a plurality of gear wheels known as satellites, mounted on a guide member called gear train (or planetary gear). The above-mentioned gear wheels mesh with a central pinion (or sun pinion) to provide a kinematic coupling.

In this way, the rotation of the gear wheels with respect to the central pinion induces relative rotational motion between the central pinion and the gear train.

The gear wheels also mesh with an internally toothed ring gear, thereby providing a kinematic coupling between the outer ring gear and the central pinion.

In other words, a planetary gear system substantially consists of a central pinion, a gear train and an internally toothed ring gear, which are coaxially arranged and kinematically connected to provide drive torque transmission.

Generally, the central pinion feeds the drive torque to the transmission system. The drive torque is transferred to the gear train, which is rotated with respect to the central pinion with an angular speed which varies according to the diameter and number of teeth of the central pinion and the gear wheels. In this configuration, the ring gear is kept fixed so that the gear wheels, by rotating relative thereto, can transfer the drive torque introduced by the central pinion to the planetary gear.

According to different applications, the planetary gear or the central pinion can be prevented from rotating to obtain different technical effects. Planetary gear systems are typically used in speed reducers in order to obtain a predetermined gear ratio.

Particular applications involve the use of more than one planetary gear system, which are operatively connected to achieve two or more reduction ratios.

Planetary gear systems are specially sized according to the drive torque value that must be transmitted during the different operating configurations.

For example, heavy vehicles such as buses, trucks, earthmoving machines and agricultural vehicles are equipped with particularly robust planetary gear systems in order to withstand the high stresses induced by the high maximum torque values to be transmitted.

However, within the same range of vehicles previously mentioned and equipped with the same type of transmission, the applied loads can vary considerably, resulting in highly variable stresses to which the transmission system is subjected.

Disadvantageously, the use of undersized systems leads to misalignment of the pins on which the gear wheels are mounted.

In fact, the high torque values induce stresses concentrated on the transmission pins, i.e. the pins on which the gear wheels are arranged, causing misalignment.

This misalignment causes a change in the kinematic coupling between the gear wheels and the central pinion, reducing the transmission effectiveness thereof.

Disadvantageously, once the kinematic coupling between the gear wheels and the central pinion is damaged, flexional-torsional moments tend to occur on the pins of the gear train due to the inertia of the bodies, which may cause yielding.

Moreover, this misalignment induces abnormal wear of the teeth of the gears, causing reduced operational life and premature failure.

Similarly, the use of oversized systems leads to reduction in efficiency as it involves an unjustified increase of the rotating mass; often such oversizing is impossible due to the available space dictated by the size of the tires, brakes, steering systems.

Moreover, similar problems may also be encountered in other industrial sectors in which planetary gear systems are commonly used; consider, for example, load handling, robotics, or the production of power tools.

In all applications known to date, it is necessary to redesign the transmission components according to the different transmittable drive torques, which entails a considerable expenditure of resources in terms of production and storage.

One of the main challenges in planetary gear systems is adapting them to different torque levels without redesigning the entire structure.

A planetary gear system is known from EP2940347A1, which discloses a cup-shaped body provided with support pins onto which gear wheels are mounted. The system includes lubrication improvements via a fixed nozzle, oil collection channel, and a pump mechanism driven by the carrier's rotation.

Furthermore, EP2940347A1 discloses an assembly method for assembling a planetary gear system comprising the following steps:
- providing a cup-shaped body having a plurality of integrated support pins suitably sized to withstand the stresses generated by a second maximum transmittable torque, said cup-shaped body having a plurality of first coupling areas, each formed at the top portion of a respective integrated support pin;
- providing a plurality of gear wheels;
- providing a first reinforcing body that can be mounted on a top portion of each of said integrated pins;
- fitting a gear wheel on each integrated support pin;
- binding the first reinforcing body to the first coupling areas of the integrated pins.

However, the system of EP2940347A1 does not offer a means for mechanically adapting the structural strength of the support pins to different torque requirements. In particular, it does not disclose an assembly method involving selectively attachable axial locking means or reinforcing elements that can be chosen based on the torque level. Therefore, such systems are not suitable for applications where structural adaptation to varying torque is required. The present invention addresses this limitation by enabling modular assembly based on the expected torque, thus improving structural adaptability without the need for multiple redesigns.

The object of the present invention is therefore to provide a method for assembling a planetary gear system, which is highly efficient and able to reduce storage costs, and allows the above-mentioned drawbacks of the prior art to be overcome.

In particular, it is an object of the present invention to provide a highly versatile transmission system which can be adapted to the different operating conditions.

The specified technical task and object are substantially achieved by an assembly method according to the appended claim.

Advantageously, the claimed method is easy to apply because the individual steps are mostly independent of the transmittable torque with the sole exception of the possible selection and assembly of the axial locking means or one of the reinforcing bodies.

Further features and advantages of the present invention will become more apparent from the indicative, and therefore non-limiting description of a preferred, hence non-exclusive embodiment of a planetary gear system and a method of assembling the same.

This description will be set forth hereinafter with reference to the accompanying drawings, which are provided for illustration purposes only, therefore not for limiting purposes, in which:

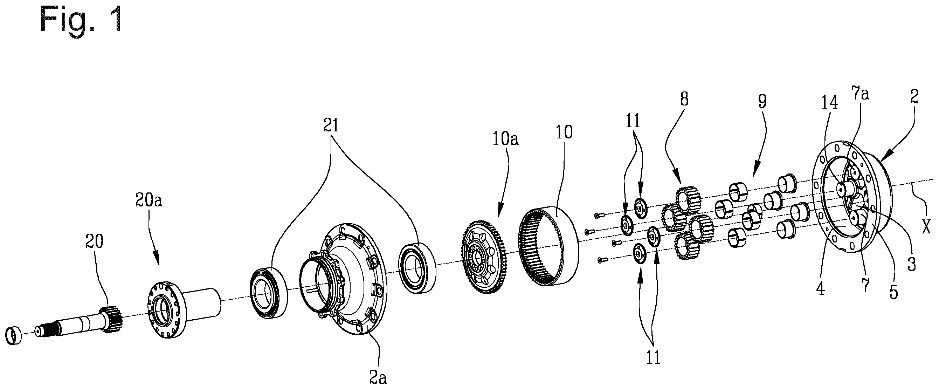

- Figure 1 is a schematic view of a planetary gear system, for the assembly of which planetary gear system an assembly method according to the present invention can be applied;
- Figure 2 is a schematic view of a planetary gear system, for the assembly of which planetary gear system an assembly method according to the present invention can be applied;
- Figure 3 is a schematic view of a planetary gear system, for the assembly of which planetary gear system an assembly method according to the present invention can be applied;

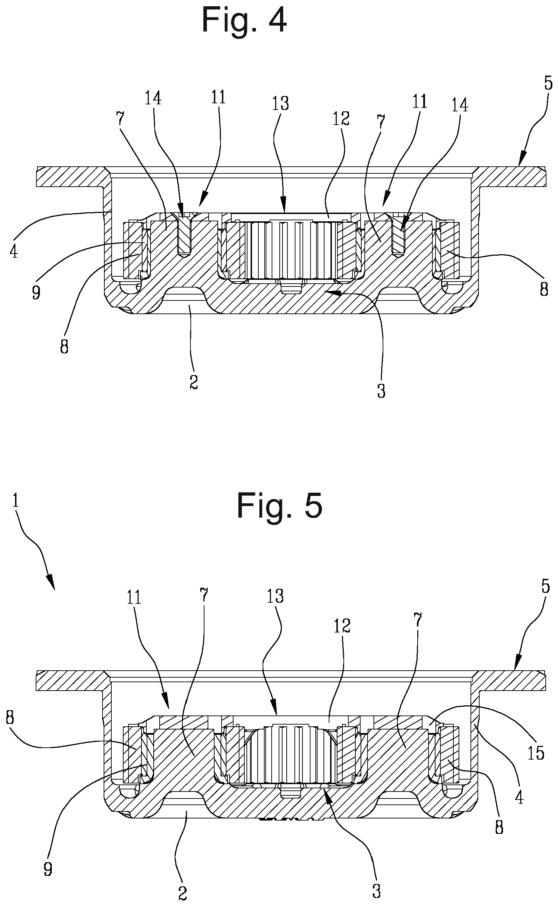

- Figure 4 is a sectional view of the planetary gear system in Figure 2;
- Figure 5 is a sectional view of the planetary gear system in Figure 3;
- Figure 6 is a schematic view of a detail of the planetary gear system in Figure 3.

In the attached figures, the reference numeral 1 generally designates a planetary gear system, hereinafter referred to as the planetary system 1.

It should be noted that hereinafter reference will be explicitly made to a planetary gear to be applied to vehicles; however, this specification is provided for dissemination purposes, as the application of the example described is an automotive/industrial application, but in no way intended to represent a limitation to the applicability of the present invention, which should be construed as suitable for any type of planetary gear.

The planetary gear system 1 comprises a cup-shaped body 2 defining a containment volume "V".

The cup-shaped body 2 comprises an inner base portion 3 and a side portion 4. Preferably, the inner base portion 3 has a substantially circular conformation extending around a central axis "X".

Preferably, the side portion 4 is integrally formed in one piece with the base portion 3.

In accordance with a possible embodiment and as shown in the attached figures, the cup-shaped body 2 comprises an anchoring portion 5, which extends radially with respect to an edge of the aforementioned side portion 4, preferably substantially parallel to the aforementioned inner base portion 3.

In particular, the anchoring portion 5 has a plurality of coupling holes 6 suitable to allow the cup-shaped body 2 to be coupled to an external support, for example a casing 2a suitable to at least partially enclose the containment volume "V" defined by the cup-shaped body 2.

Advantageously, the cup-shaped body 2 is made of a high-strength metallic material, for example steel, spheroidal cast iron. Alternatively, lighter materials could also be used for other applications.

The cup-shaped body 2 has a plurality of integrated support pins 7 arranged on the inner base portion 3. In particular, the integrated support pins 7 extend along a direction substantially perpendicular to the base portion 3, parallel to the aforementioned central axis "X".

In particular, the integrated support pins 7 are formed integrally in one piece with the cup-shaped body 2.

Preferably, the integrated support pins 7 are equally angularly spaced and radially equidistant from the central axis "X".

Advantageously, the integrated support pins 7 are suitably sized to withstand the stresses generated by a first predetermined maximum transmittable torque.

In other words, the integrated support pins 7 have diameters and lengths suitable to withstand the loads induced by a predetermined drive torque shifted through the planetary system 1.

The planetary system 1 further comprises a plurality of gear wheels 8 rotatably mounted on the integrated support pins 7 to define an operating condition of the planetary system 1.

In particular, the integrated support pins 7 are configured to support the gear wheels 8.

Advantageously, the planetary system 1 may comprise rotatable coupling means 9 interposed between the integrated support pins 7 and a respective gear wheel 8 to facilitate the rotation thereof.

Preferably, the rotatable coupling means 9 comprise at least one bearing. In accordance with the embodiment shown in the attached figures, the planetary system 1 comprises four integrated support pins 7 and four respective gear wheels 8.

In particular, the gear wheels 8 are suitable to mesh with an internally toothed ring gear 10 that can be housed inside the cup-shaped body 2 so that it is arranged along the perimeter of the inner side portion 4 of the cup-shaped body 2.

The planetary system 1 further comprises axial locking means 11 mounted on a top portion 7a of at least one of the integrated support pins 7. Advantageously, the axial locking means 11 support the gear wheels 8 during rotation on the integrated support pins 7, preventing them from slipping out of place.

In accordance with a possible embodiment of the present invention, the axial locking means 11 can be bound to the integrated pins 7 by means of a screw-and-nut type coupling.

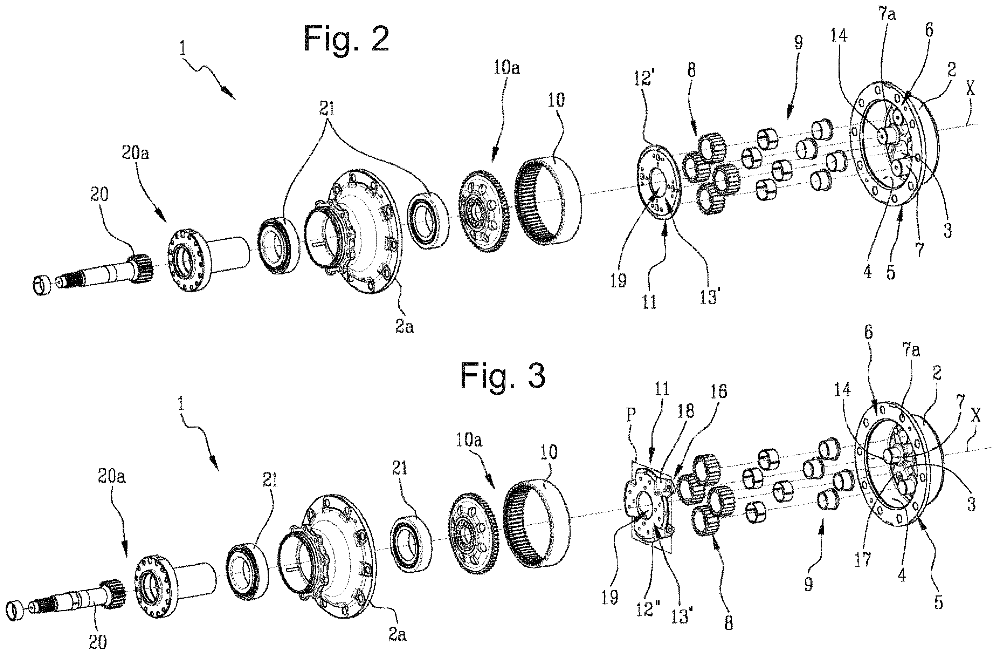

In accordance with the embodiments shown in figures 2 and 3, the planetary system 1 comprises a reinforcing body 12', 12" rigidly connected to the cup-shaped body 2 and shaped to bind together the aforementioned top portions 7a of the integrated support pins 7.

Preferably, the reinforcing body 12', 12" comprises the axial locking means 11.

In particular, the axial locking means 11 can be formed integrally in one piece with the reinforcing body 12', 12".

Advantageously, the reinforcing body 12', 12" gives rigidity and robustness to the planetary system 1, helping to support the actions resulting from the predetermined maximum transmittable torque.

In particular, the geometrical conformation and the mechanical properties of the reinforcing body 12', 12" are defined as a function of the drive torque transmitted during an operating condition of the planetary system 1.

In this regard, the reinforcing body can be a first reinforcing body 12' (Figure 2) or a second reinforcing body 12" (Figure 3).

In particular, the first reinforcing body 12' is sized in order to adjust the strength of the integrated support pins 7 to the stresses generated by a second maximum transmittable torque.

The second reinforcing body 12" is sized in order to adjust the strength of the integrated support pins 7 to the stresses generated by a third maximum transmittable torque.

Both the second and the third maximum transmittable torque are greater than the first.

In addition, the third maximum transmittable torque is greater than the second.

Preferably, said maximum transmittable torques are sufficiently spaced apart, in value, to allow categorization of the applied loads. In other words, the first transmissible torque will be representative of "light" applications (light duty), the second transmittable torque will be representative of "medium" applications (medium duty), and the third transmittable torque will be representative of "heavy" applications (heavy duty).

In other words, the sizing of the pins and the reinforcing bodies is such that the integrated support pins, by themselves, are able to meet applications that generate maximum torque around the first transmittable torque, or anyway a lower torque.

The integrated support pins reinforced with the first reinforcing body 12' are able to meet applications that generate maximum torque around the second transmittable torque, or anyway between the first and the second maximum transmittable torque.

The integrated support pins reinforced with the second reinforcing body 12" are able to meet applications that generate maximum torque around the third transmittable torque, or anyway between the second and the third maximum transmittable torque.

As shown in the attached figures, both the first reinforcing body 12' and the second reinforcing body 12" preferably comprise a respective plate-like portion 13', 13" defining a lying plane "P".

In particular, the plate-like portion 13', 13" is configured to be connected to the top portion 7a of the integrated support pins 7 so as to limit the relative movement thereof.

Advantageously, the plate-like portion 13', 13" gives rigidity to the planetary system by counteracting the flexional-torsional moment induced on the integrated support pins 7 by the movement of the gear wheels 8.

In particular, the plate-like portion 13', 13" can be rigidly connected to a plurality of first coupling areas 14, each formed at the top portion 7a of a respective integrated pin 7.

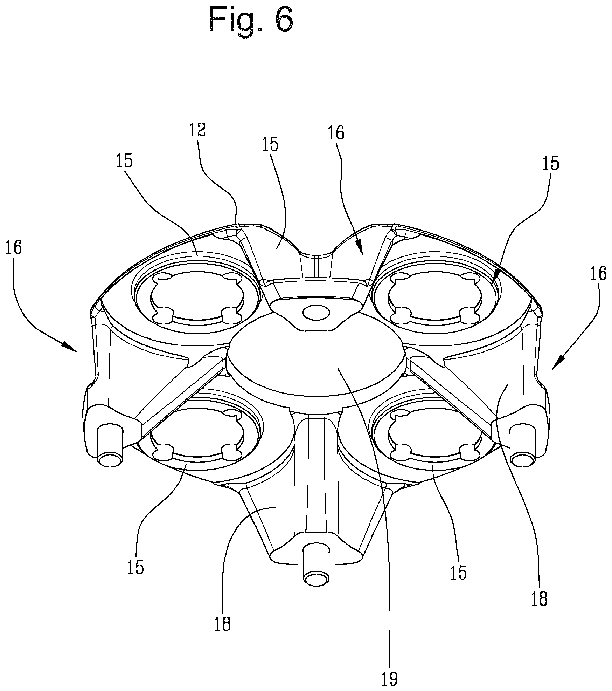

In accordance with a possible embodiment shown for example in figures 3 and 6, the second reinforcing body 12" comprises a plate-like portion 13 provided with a plurality of radially retaining elements 15, each fitted on a respective integrated pin 7.

Advantageously, the radially retaining elements 15 may be defined by at least one unilateral shoulder.

The second reinforcing body 12" further comprises at least one coupling portion 16 rigidly connected to a plurality of second coupling areas 17 formed at the inner base portion 3.

In particular, each of the plurality of second coupling areas 17 is angularly interposed between two successive integrated support pins 7.

"Angularly interposed" means that the integrated support pins 7 are arranged alternately with the second coupling areas 17
according to a circumferential direction with respect to the central axis "X". Advantageously, this alternate arrangement causes a reduction in the inertial forces induced on the cup-shaped body 2 during the operating conditions.

In accordance with this embodiment, the coupling portion 16 comprises a plurality of connecting arms 18 extending out of the above-mentioned lying plane between a first end bound to the plate-like portion 13" and a second end rigidly connected to a respective second coupling area 17.

Preferably, the coupling portion 14 is integrally formed in one piece with the plate-like portion 13".

As shown in the attached figures, the plate-like portion 13', 13" of the first 12' or the second reinforcing body 12" has an opening 19 suitable to allow insertion of a transmission gear, preferably a central pinion 20, intended to form a kinematic coupling with the gear wheels 8.

Preferably, the planetary system 1 comprises a pinion assembly 20a, with a respective central pinion 20, and a ring gear assembly 10a, with a respective internally toothed ring gear 10, operatively connected to the cup-shaped body 2 for transmitting a drive torque.

According to a typical operating configuration, the central pinion 20 is rotated and transmits a drive torque to the gear wheels 8. These gear wheels 8 are in mesh with the internally toothed ring gear 10, and thanks to this coupling transfer the drive torque to the cup-shaped body 2, which rotates accordingly with an angular speed defined by the predetermined gear ratio.

In particular, this rotation is allowed thanks to the presence of a plurality of bearings 21 interposed between the cup-shaped body 2 and the pinion assembly 20a and/or the ring gear assembly 10a.

The present invention refers to an assembly method for assembling a planetary gear system.

This method is preferably, but not exclusively, implemented for assembling the planetary gear system 1 as described heretofore. For this reason, the features already extensively described in relation to the planetary gear system, if in common with the method described below, shall also apply mutatis mutandis to the subsequent description of the method being the object of the invention.

This method comprises providing a cup-shaped body having a plurality of integrated support pins 7 suitably sized to withstand the stresses generated by a first maximum transmittable torque.

Also provided are a plurality of gear wheels 8 and a corresponding plurality of axial locking means 11 mountable on a top portion 7a of each one of said integrated support pins 7.

The gear wheels 8 are each fitted on a respective integrated pin 7.

At least a first 12' and a second reinforcing body 12" are provided (preferably in stock), which are sized in order to increase the strength of the integrated support pins 7.

In particular, the first reinforcing body 12' is sized in order to adjust the strength of the integrated support pins 7 to the stresses generated by a second maximum transmittable torque.

The second reinforcing body 12" is sized in order to adjust the strength of the integrated support pins 7 to the stresses generated by a third maximum transmittable torque.

Both the second and the third maximum transmittable torque are greater than the first.

In addition, the third maximum transmittable torque is greater than the second.

According to the invention, there is provided a step of selecting among the axial locking means 11, the first reinforcing body 12' and the second reinforcing body 12" according to the desired maximum transmittable torque.

In other words, the strength to be given to the system 1, i.e. which, if any, reinforcing bodies are required, is selected according to the desired (or design) maximum transmittable torque.

Following this selection, the method comprises either:
- binding the axial locking means 11 alone to the integrated support pins 7 if the desired maximum transmittable torque is less than the predetermined first maximum torque value;
- binding the first reinforcing body 12' to the integrated support pins 7 if the desired maximum transmittable torque is between the predetermined first maximum torque value and the predetermined second maximum torque value;
- binding the second reinforcing body 12" to the integrated support pins 7 if the desired maximum transmittable torque is between the predetermined second maximum torque value and the predetermined third maximum torque value.

Advantageously, with a simple selection step (carried out for example by means of a management system) it is possible to identify the ideal configuration for the desired application and provide an assembly capable of conferring the desired strength to the system without the need for any component redesign and without the risk of unnecessary oversizing or undersizing.

The cup-shaped body 2 has a plurality of first coupling areas 14, each formed at the top portion 7a of a respective pin 7, and a plurality of second coupling areas 17 formed at an inner base portion 3.

The method further comprises, in case the transmittable torque is between the predetermined first maximum torque value and the predetermined second maximum torque value, a step of binding the first reinforcing body 12' to the first coupling areas 14.

Alternatively, if the transmittable torque is between the predetermined second maximum torque value and the predetermined third maximum torque value, the method comprises binding the second reinforcing body 12" to the second coupling areas 17 so as to assist the integrated support pins 7 in supporting the loads induced by the drive torque transmitted during an operating condition.

The present invention achieves the intended objects, overcoming the drawbacks of the prior art.

In fact, the planetary gear system assembled according to the method of present invention allows increased versatility of the transmission systems so that they can adapt more effectively to the different operating conditions in which they can be used thanks to the presence of a reinforcing body suitable to assist the transmission pins in supporting the loads induced by the drive torques transmitted during the operational life of the transmission system.

Advantageously, the planetary gear system and the related assembly method allow the efficiency of the production cycle to be increased and the storage costs to be reduced thanks to the possibility of increasing the maximum torque transmittable by the transmission system simply by replacing the reinforcing body.

## Claims

1. An assembly method for assembling a planetary gear system comprising the steps of:
- providing a cup-shaped body having a plurality of integrated support pins (7) suitably sized to withstand the stresses generated by a first maximum transmittable torque;
- providing a plurality of gear wheels (8);
- providing a corresponding plurality of axial locking means (11) that can be mounted on a top portion (7a) of each of said integrated support pins (7);
- fitting a gear wheel (8) on each of the integrated support pins (7) **wherein;**
- said cup-shaped body (2) has a plurality of first coupling areas (14), each formed at the top portion (7a) of a respective integrated pin (7), and a plurality of second coupling areas (17) formed at an inner base portion (3), and wherein said assembly method comprises the further steps of:
- providing at least a first (12') and a second reinforcing body (12"), which are sized in order to increase the strength of the integrated support pins (7) so as to adapt it to the stresses respectively generated by a second and a third maximum transmittable torque, both greater than said first maximum transmittable torque; said third maximum transmittable torque being greater than said second maximum transmittable torque;
- selecting among said axial locking means (11), the first reinforcing body (12') and the second reinforcing body (12") based on the required maximum torque to be transmitted;
- binding only the plurality of axial locking means (11) to the top portion (7a) of each of said integrated support pins (7) when the required torque to be transmitted is less than the predetermined first maximum torque value:
- binding only the first reinforcing body (12') to the integrated support pins (7), by binding it to the first coupling areas (14) when the required maximum torque to be transmitted is between the predetermined first maximum torque value and the predetermined second maximum torque value;
- binding only the second reinforcing body (12") to the integrated support pins (7), by binding it to the second coupling areas (17) when the required maximum torque to be transmitted is between the predetermined second maximum value and the predetermined third maximum torque value.

## Patentansprüche

1. Verfahren zum Montieren eines Planetengetriebesystems, umfassend die folgenden Schritte:
- Bereitstellen eines becherförmigen Körpers mit einer Mehrzahl integrierter Stützbolzen (7), die in geeigneter Weise dimensioniert sind, um die durch ein erstes maximal übertragbares Drehmoment erzeugten Belastungen auszuhalten;
- Bereitstellen einer Mehrzahl von Zahnrädern (8);
- Bereitstellen einer entsprechenden Mehrzahl axialer Verriegelungsmittel (11), die an einem oberen Abschnitt (7a) jedes der integrierten Stützbolzen (7) montierbar sind;
- Aufstecken eines Zahnrades (8) auf jeden der integrierten Stützbolzen (7), **wobei:**
- der becherförmige Körper (2) eine Mehrzahl erster Kupplungsbereiche (14) aufweist, die jeweils am oberen Abschnitt (7a) eines jeweiligen integrierten Bolzens (7) ausgebildet sind, sowie eine Mehrzahl zweiter Kupplungsbereiche (17), die an einem inneren Bodenbereich (3) angeordnet sind, und wobei das Montageverfahren ferner die folgenden Schritte umfasst:
- Bereitstellen mindestens eines ersten (12') und eines zweiten Verstärkungskörpers (12"), die so dimensioniert sind, dass sie die Festigkeit der integrierten Stützbolzen (7) erhöhen, um sie an die durch ein zweites bzw. drittes maximal übertragbares Drehmoment erzeugten Belastungen anzupassen, wobei beide größer sind als das erste maximale übertragbare Drehmoment; wobei das dritte maximale übertragbare Drehmoment größer ist als das zweite maximale übertragbare Drehmoment;
- Auswählen zwischen den axialen Verriegelungsmitteln (11), dem ersten Verstärkungskörper (12') und dem zweiten Verstärkungskörper (12") basierend auf dem erforderlichen maximal zu übertragenden Drehmoment;
- Verbinden nur der Mehrzahl von axialen Verriegelungsmitteln (11) mit dem oberen Teil (7a) jedes der integrierten Stützstifte (7), wenn das erforderliche zu übertragende Drehmoment kleiner als der vorbestimmte erste maximale Drehmomentwert ist:
- Verbinden nur des ersten Verstärkungskörpers (12') mit den integrierten Stützbolzen (7) durch Verbinden mit den ersten Kupplungsbereichen (14), wenn das gewünschte zu übertragende maximale Drehmoment zwischen dem vorgegebenen ersten maximalen Drehmomentwert und dem vorgegebenen zweiten maximalen Drehmomentwert liegt;
- Verbinden nur des zweiten Verstärkungskörpers (12") mit den integrierten Stützstiften (7), indem er mit den zweiten Kupplungsbereichen (17) verbunden wird, wenn das erforderliche maximale zu übertragende Drehmoment zwischen dem vorbestimmten zweiten Maximalwert und dem vorbestimmten dritten Maximalwert des Drehmoments liegt.

## Revendications

1. Procédé d'assemblage d'un système d'engrenage planétaire, comprenant les étapes suivantes :
- fournir un corps en forme de coupelle comportant une pluralité de broches de support intégrées (7), dimensionnées de manière appropriée pour supporter les contraintes générées par un premier couple de transmission maximal ;
- fournir une pluralité de roues dentées (8) ;
- fournir une pluralité correspondante de moyens de verrouillage axial (11) pouvant être montés sur une partie supérieure (7a) de chacune desdites broches de support intégrées (7) ;
- monter une roue dentée (8) sur chacune des broches de support intégrées (7), dans **lequel :**
- ledit corps en forme de coupelle (2) présente une pluralité de premières zones d'accouplement (14), chacune formée sur la partie supérieure (7a) d'une broche intégrée (7) respective, et une pluralité de deuxièmes zones d'accouplement (17) formées sur une portion de base intérieure (3), et dans lequel ledit procédé d'assemblage comprend en outre les étapes suivantes :
- fournir au moins un premier (12') et un second corps de renforcement (12"), dimensionnés pour augmenter la résistance des broches de support intégrées (7), de manière à les adapter aux contraintes générées respectivement par un deuxième et un troisième couple de transmission maximal, tous deux supérieurs audit premier couple de transmission maximal ; ledit troisième couple de transmission maximal étant supérieur au deuxième couple de transmission maximal ;
- sélectionner parmi lesdits moyens de verrouillage axial (11), le premier corps de renforcement (12') et le second corps de renforcement (12"), en fonction du couple maximal requis à transmettre ;
- fixer uniquement la pluralité de moyens de verrouillage axial (11) sur la partie supérieure (7a) de chacune desdites broches de support intégrées (7), lorsque le couple à transmettre requis est inférieur à la valeur prédéterminée du premier couple maximal ;
- fixer uniquement le premier corps de renforcement (12') aux broches de support intégrées (7), en le fixant aux premières zones d'accouplement (14), lorsque le couple maximal requis à transmettre est compris entre la valeur prédéterminée du premier couple maximal et la valeur prédéterminée du deuxième couple maximal ;
- fixer uniquement le deuxième corps de renforcement (12") aux broches de support intégrées (7), en le fixant aux deuxièmes zones d'accouplement (17), lorsque le couple maximal requis à transmettre est compris entre la valeur prédéterminée du deuxième couple maximal et la valeur prédéterminée du troisième couple maximal.
